Europäisches Patentamt

European Patent Office

Office européen des brevets

(11) Veröffentlichungsnummer: **0 273 865 B1**

(12) **EUROPÄISCHE PATENTSCHRIFT**

(45) Veröffentlichungstag der Patentschrift: **29.01.92**

(51) Int. Cl.⁵: **B60P 1/44**

(21) Anmeldenummer: **87810758.0**

(22) Anmeldetag: **17.12.87**

(54) **Plattform, insbesondere Ladebordwand für Fahrzeuge.**

(30) Priorität: **29.12.86 DE 3644602**

(43) Veröffentlichungstag der Anmeldung:
**06.07.88 Patentblatt 88/27**

(45) Bekanntmachung des Hinweises auf die
Patenterteilung:
**29.01.92 Patentblatt 92/05**

(84) Benannte Vertragsstaaten:
**AT BE CH DE ES FR GB GR IT LI LU NL SE**

(56) Entgegenhaltungen:
**EP-A- 0 221 015**
**FR-A- 1 256 922**
**FR-A- 2 062 421**
**FR-A- 2 398 843**

(73) Patentinhaber: **ALUSUISSE-LONZA SERVICES AG**
**Feldeggstrasse 4**
**CH-8034 Zürich(CH)**

(72) Erfinder: **Kemen, Hans-Jörgen**
**Krähenburgstrasse 18**
**W-7700 Singen(DE)**

## Beschreibung

Die Erfindung betrifft eine Plattform, insbesondere eine Ladebordwand für Fahrzeuge, mit eine Fläche bildenden Plattformprofilen sowie wenigstens einem an einer der Plattformkanten als gesondertes Bauteil vorgesehenes und an das/die benachbarte/n Plattformprofil/e durch Verbindungsorgane wie Schrauben angeschlossenes Anschlußorgan mit Ausnehmungen oder Augen aufweisenden Laschen für die Plattform haltende Gelenkbolzen, wobei das Anschlußorgan mit seinen Laschen als Anschlußkopf ausgebildet ist, der mit einer Sockelplatte zumindest teilweise einer Gegenfläche des benachbarten Plattformprofils anliegt.

Durch die EP-A-0081 115 ist eine einseitig anhängbare Fahrzeug-Hubwand bekannt mit trogförmigem Anschlußprofil, das an seiner offenen Seite von den Enden der langgelegten Plattformprofile abgedeckt und mit abkragenden Anschlußlaschen ausgerüstet ist. Letztere nehmen in Bohrungen oder Augen zum einen die Fahrzeug-Hubwand haltende Gelenkbolzen auf sowie zum anderen Teile einer hydraulischen Hubeinrichtung. Es ist zudem vorgesehen, das trogförmige Anschlußprofil mittels Schrauben an den Enden der Plattformprofile festzulegen.

Diese sehr speziell konzipierte vorbekannte Konstruktion ist bei stranggepreßten Leichtmetall-Hohlprofilen nicht verwendbar: bei solchen bekannten Ladebordwänden werden -- jene Anschlußlaschen aufweisende -- Anschlußblöcke angeschweißt. Übliche Anschlußblöcke aus Stahl werden an den Leichtmetall-Hohlprofilen durch Verbindungsorgane gehalten.

Besondere Probleme ergeben sich am Übergang des Anschlußblockes zur eigentlichen Plattformfläche bezüglich der Einleitung von Kräften bei Kragbelastung, insbesondere im Hinblick auf die den jeweiligen Verhältnissen anzupassende Lage der Fahrfläche, welche von der im ausgeklappten Zustand nach oben weisenden Oberfläche der Plattform angeboten wird. Ein anderes Problem ergibt sich durch den Wunsch, die Anschlußblöcke auch nach längerem Gebrauch der Plattform von dieser lösen zu wollen.

Um Plattformen bzw. Ladebordwände der eingangs erwähnten Art bei Meidung der vorstehend genannten Mängel zu verbessern, wird mit dem deutschen Patent 35 37 938 vorgeschlagen, das Anschlußorgan mit seinen Laschen als Anschlußkopf auszubilden, welcher mit einer Sockelplatte zumindest teilweise an einer Gegenfläche des benachbarten Plattformprofils anliegt sowie einen Anschlag der Ladebordwand so hintergreift, daß eine Fläche der Sockelplatte an einer zum freien Ende der Ladebordwand gerichteten Anschlagfläche anliegt. Dank dieser Maßgabe wird ein wesentlicher Teil der die Sockelplatte von dem auskragenden Plattformprofil zu trennen trachtenden Kräfte in jene Anschlagfläche abgeleitet.

Der Erfinder hat sich nun das Ziel gesetzt, an der gattungsbildenden Plattform eine weitere Verbesserung vorzunehmen, insbesondere den Zusammenbau der Teile zu vereinfachen.

Zur Lösung dieser Aufgabe führt, daß in der Gegenfläche des dem Anschlußkopf benachbarten Plattformprofils wenigstens eine hinterschnittene Längsnut etwa parallel zur Profillängsachse verläuft, in deren hinterschneidenden Hohlraum zumindest eine Formleiste angeordnet ist, welche beide die Längsnut begrenzenden Profilwandstreifen berührt sowie die Schraube/n des Anschlußkopfes aufnimmt. Dazu hat es sich als günstig erwiesen, die -- bevorzugt als Strangpreßprofil ausgebildete -- Formleiste an einer Seite mit zwei in Abstand zueinander angebrachten Rippen zu versehen, welche Vorsprünge an den Profilwandstreifen hintergreifen.

Dank dieser Maßgaben entsteht eine sehr variable Verbindung zwischen den Anschlußköpfen einerseits und dem benachbarten Plattformprofil anderseits; die Anschlußköpfe sind auch nach Verbindung mit der Formleiste in der Längsnut des Plattformprofils verschiebbar und können somit nachträglich justiert werden. Das Einsetzen der Formleiste/n in die entsprechende/n Hohlräume des Plattformprofiles erfolgt in einfacher Weise ohne Handhabungsprobleme.

Um ein Verformen des Plattformprofiles durch aus dem Anschlußkopf eingeleitete Kräfte zu vermeiden, ist die Formleiste zusätzlich mit einem klammerartigen, C-förmigen Querschnitt ausgestattet, der Vorsprünge an der Innenseite des Plattformprofiles mit zunehmendem Schraubenzug entsprechend zueinander zu drücken trachtet.

Diese Klammerfunktion der Formleiste wird noch dadurch verbessert, daß die Rippen pultartige Innenflächen aufweisen, welche eine Nut U-förmigen Querschnittes der Formleiste begrenzen und beim Anziehen der Schraube auf die Vorsprünge des Plattformprofiles unter Keilwirkung aufgeschoben werden.

Es entsteht so eine sichere und innige Verbindung der Funktionsteile.

Eine bevorzugte Ausfürungsform der Erfindung ergibt sich aus der nachfolgenden Beschreibung anhand der Zeichnung; diese zeigt in

Fig. 1:     eine Schrägsicht unter eine überfahrbare Ladebordwand;

Fig. 2:     eine erfindungsgemäße Ausführungsform in vergrößertem Detail;

Fig. 3:     eine Schrägsicht auf ein Detail der Fig. 2.

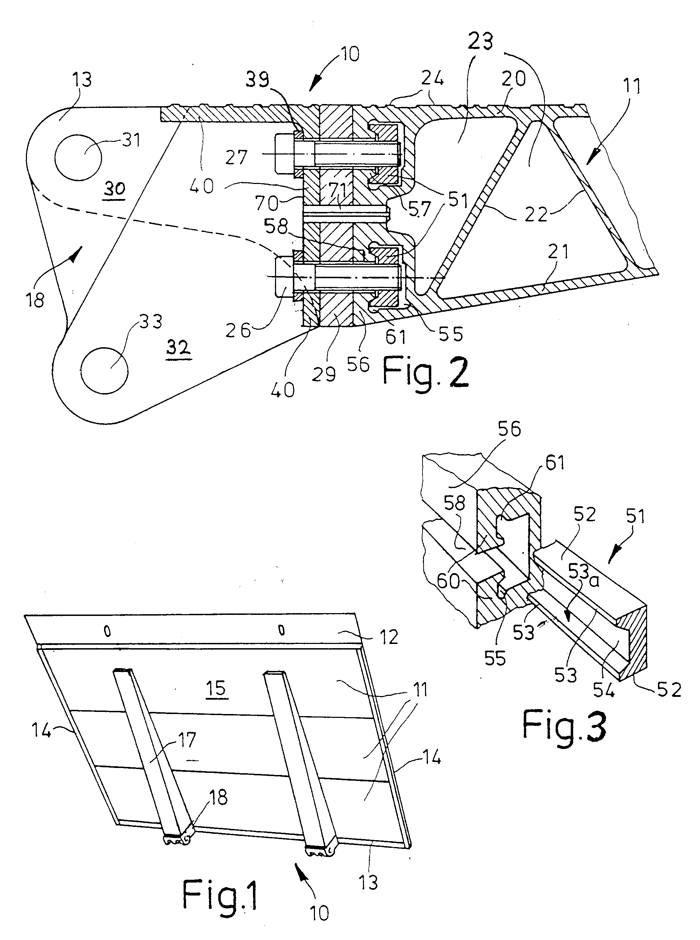

Eine in Fig. 1 schematisiert angedeutete Ladebordwand 10 besteht in der gewählten Ausführung aus drei Plattformprofilen 11, einer heckwärtigen Auffahrzunge 12, einem -- zu einem nicht weiter dargestellten Lastwagenaufbau gerichteten -- Anschlußende 13 und seitlichen Abdeckelementen 14. An der Unterseite 15 der Ladebordwand 10 queren jene Plattformprofile 11 zwei Unterbauprofile 17 mit Anschlußköpfen 18.

Die Plattformprofile 11 sind aus Aluminium als stranggepreßte Hohlkammerprofile gefertigt mit jeweils zwei Profilwänden 20, 21, welche durch geneigte Querstege 22 verbunden sind und Kammern 23 begrenzen. Die obere Profilwand 20 ist an der Außenfläche mit angeformten Querrippen 24 als Rutschsicherung versehen.

Von der Sockelplatte 29 ragen Anschlußlaschen 30 mit Achsaugen 31 für einen nicht gezeigten Gelenkbolzen ab sowie wenigstens eine untere Lasche 32, in deren Augöffnung 33 eine -- in der Zeichnung vernachläßigte -- Hydraulikeinrichtung angreift.

Gemäss Fig. 2 ist vor die Sockelplatte 29 des Anschlußkopfes 18 ein Profil 40 von L-förmigem Querschnitt gesetzt, daß mit der Sockelplatte 29 und Unterlegscheiben 39 von Schrauben 26,27 durchsetzt ist. Dieses Profil kann auch fehlen.

Die Schrauben 26,27 enden in Dübelleisten 51, die als durchgehende Strangpreßprofile C-artigen Querschnittes mit entlang den Längskanten 52 verlaufenden Rippen 53, die eine sich einwärts querschnittlich verjüngende Nut 54 begrenzen, ausgebildet sind.

Die Dübelleisten 51 werden in Hohlräume 55 der Stirnwand 56 des Plattformprofiles 11 eingeschoben und hintergreifen dort mit ihren Rippen 53 dazu querschnittlich gegenläufige Vorsprünge 57 der Stirnwand 56.

Jeder Hohlraum 55 ist Teil einer hinterschnittenen Längsnut 58, in welcher die Schraube 26,27 horizontal bewegt werden kann. Wird die Schraube 26, 27 angezogen, so gleiten die Rippen 53 mit ihren zueinander weisenden Pultflächen $53_a$ auf die Vorsprünge 57 des Plattformprofiles 11 und sichern damit die beiden die Längsnut 58 begrenzenden Profilwandstreifen 60 in der Art einer Klammer gegen möglicherweise auftretende Spreizkräfte. An den Vorsprüngen 57 weist im übrigen der Hohlraum 55 an seinen Längsflächen ebenfalls nutartige Einformungen 61 auf, die das Einführen der Dübelleiste 51 erleichtern.

In Fig. 2 ist in einer durchgehenden Bohrung 70 ein Zentrierstift 71 zu erkennen.

## Patentansprüche

1. Plattform, insbesondere Ladebordwand für Fahrzeuge, mit eine Fläche bildenden Plattformprofilen sowie wenigstens einem an einer der Plattformkanten als gesondertes Bauteil vorgesehenes und an das/die benachbarte/n Plattformprofil/e durch Verbindungsorgane wie Schrauben angeschlossenes Anschlußorgan mit Ausnehmungen oder Augen aufweisenden Laschen für die Plattform haltende Gelenkbolzen vorgesehen, wobei das Anschlußorgan mit seinen Laschen als Anschlußkopf ausgebildet ist, der mit einer Sockelplatte zumindest teilweise einer Gegenfläche des benachbarten Plattformprofiles aus Leichtmetall anliegt,

dadurch gekennzeichnet,

daß in der Gegenfläche (56) des dem Anschlußkopf (18) benachbarten Plattformprofils (11) wenigstens eine hinterschnittene Längsnut (58) etwa parallel zur Profillängsachse verläuft, in deren hinterschneidendem Hohlraum (55) zumindest eine Formleiste (51) angeordnet ist, welche beide die Längsnut begrenzenden Profilwandstreifen (60) berührt sowie die Schraube/n (26,27) des Anschlußkopfes aufnimmt.

2. Plattform nach Anspruch 1, dadurch gekennzeichnet, daß die Formleiste (51) an einer Seite (2) in Abstand zueinander angebrachte Rippen (53) aufweist, welche Vorsprünge (57) an den Profilwandstreifen (60) hintergreifen.

3. Plattform nach Anspruch 1 oder 2, dadurch gekennzeichnet, daß die Rippen (53) pultartige Innenflächen ($53_a$) aufweisen, welche eine Nut (54) U-förmigen Querschnittes der Formleiste (51) begrenzen.

4. Plattform nach einem der Ansprüche 1 bis 3, dadurch gekennzeichnet, daß die Vorsprünge (57) des Plattformprofils (11) Gegenflächen für die Pultflächen ($53_a$) der Rippen (53) der Formleiste (51) aufweisen.

5. Plattform nach einem der Ansprüche 1 bis 4, dadurch gekennzeichnet, daß die Formleiste (51) aus einem Leichtmetallprofil besteht und mit Gewindebohrungen versehen ist.

## Claims

1. Platform, in particular load-lifting board for vehicles, having platform profiles forming a surface and at least one connecting element provided as a separate component at one of the platform edges and connected to the neighbouring platform profiles (s) by means of connecting elements, such as screws, and with tongues having recesses or eyes for the hinge pins retaining the platform, in which the connecting element with its tongues is constructed as a connecting head which rests at least partially against a counter surface of the neighbouring platform profile made from light metal by means of a base plate or the like, characterised in that at least one undercut longitudinal groove (58) extends approximately parallel to the longitudinal axis of the profile in the counter surface (56) of the platform profile (11) next to the connecting head (18), at least one moulding (51), which contacts both profile wall strips (60) limiting the longitudinal groove and receives the screw (s) (26, 27) of the connecting head, being arranged in the undercut cavity (55) of the longitudinal axis of the profile.

2. Platform according to claim 1, characterised in that the moulding (51) has ribs (53) placed at a distance from one another on one side (2) which engage projections (57) of the profile wall strips (60).

3. Platform according to claim 1 or 2, characterised in that the ribs (53) have lectern-like inner surfaces ($53_a$) which limit a groove (54) of a U-shaped cross-section on the moulding (51).

4. Platform according to one of the claims 1 to 3, characterised in that the projections (57) of the platform profile (11) have counter surfaces for the lectern surfaces ($53_a$) of the ribs (53) on the moulding (51).

5. Platform according to one of the claims 1 to 4, characterised in that the moulding (51) consists of a light metal profile and is provided with threaded bores.

**Revendications**

1. Plate-forme, notamment hayon de chargement pour véhicules, prévue avec des profilés de plate-forme formant une surface ainsi qu'au moins un organe d'assemblage à pattes présentant des évidements ou des oeillets pour les axes d'articulation maintenant la plate-forme, prévu comme élément de construction distinct sur l'une des arêtes de la plate-forme et assemblé au(x) profilé(s) de plate-forme voisin(s) par des organes de raccordement tels que des vis, l'organe d'assemblage et ses pattes ayant la forme d'une tête d'assemblage qui repose par une plaque d'assise au moins partiellement contre une contre-surface du profilé de plate-forme voisin en métal léger, caractérisée en ce que la contre-surface (56) du profilé de plate-forme (11) voisin de la tête d'assemblage (18) présente au moins une rainure longitudinale contre-dépouillée à peu près parallèle à l'axe longitudinal du profilé, dans la cavité (55) dépouillée de laquelle est disposée au moins une baguette moulée (51) qui est en contact avec les deux semelles (60) de la paroi de profité délimitant la rainure longitudinale et reçoit la(les) vis (26, 27) de la tête d'assemblage.

2. Plate-forme selon la revendication 1, caractérisée en ce que la baguette moulée (51) présente sur une face (2) des nervures (53) à distance les unes des autres, qui enserrent par l'arrière des parties en saillie (57) des semelles (60) de la paroi de profilé.

3. Plate-forme selon la revendication 1 ou 2, caractérisée en ce que les nervures (53) présentent des surfaces internes ($53_a$) en gradin qui délimitent une rainure (54) à section en U de la baguette moulée (51).

4. Plate-forme selon l'une des revendications 1 à 3, caractérisée en ce que les parties en saillie (57) du profilé de plate-forme (11) présentent des contre-surfaces pour les surfaces en gradin ($53_a$) des nervures (53) de la baguette moulée (51).

5. Plate-forme selon l'une des revendications 1 à 4, caractérisée en ce que la baguette moulée (51) est constituée par un profilé en métal léger et est munie de trous taraudés.

Fig. 2

Fig.3

Fig.1